# EUROPEAN PATENT APPLICATION

(11) **EP 2 306 264 A2**
(43) Date of publication of application: **06.04.2011**
(21) Application number: 09754983.6
(22) Date of filing: 20.05.2009
(51) Int. Cl.: G06F 1/16, G06K 19/07, G06F 13/10

(54) **MEMORY CARD SUPPLEMENTED WITH WIRELESS COMMUNICATION MODULE, TERMINAL FOR USING SAME, MEMORY CARD INCLUDING WPAN COMMUNICATION MODULE, AND WPAN COMMUNICATION METHOD USING SAME**

(30) Priority: 26.05.2008 KR 20080048661; 18.11.2008 KR 20080114597
(71) Applicant: SK Telecom. Co., Ltd., Seoul 100-999 (KR)
(72) Inventor: KIM, Jeongdeok, Seoul 137-060 (KR); KIM, Youngwoo, Seongnam-si Gyeonggi-do 463-060 (KR); YU, Jaehwang, Seoul 135-240 (KR); HONG, Sungcheol, Seoul 135-240 (KR)
(74) Representative: Barth, Stephan Manuel
(86) International application number: PCT/KR2009/002650
(87) International publication number: WO 2009/145518

(57) **Abstract**

A memory card with a wireless communication module attached and its associated terminal for using the memory card are disclosed. A memory card that provides both of an external memory to an information communication terminal and a connectable memory card WPAN add-on to an information communication terminal lacking a built-in wireless communication module, and its associated information communication terminal are disclosed. According to the disclosure, the memory card with the extra wireless communication module adds the WPAN function to the information communication terminal lacking a built-in wireless communication module by inserting it into a card slot of the terminal, protecting the wireless communication module from external impacts and permitting the module to be left and secured inside the terminal at the card slot without a concern to lose such a module.

## Description

### CROSS-REFERENCE TO RELATED APPLICATION

This application claims the priorities of **Korean Patent Application No.** 10-2008-0048661, filed on May 26, 2008 and **Korean Patent Application No.** 10-2008-0114597, filed on November 18, 2008 in the KIPO (Korean Intellectual Property Office), the disclosures of which are incorporated herein in their entirety by reference. Further, this application is the National Phase application of International Application No. PCT/KR2009/002650, filed on May 20, 2009**,** which designates the United States and was published in Korean. Each of these applications is hereby incorporated by reference in their entirety into the present application.

### [Technical Field]

The present disclosure relates to a memory card with a wireless communication module attached, its associated terminal for using the memory card, a memory card with a WPAN communication module, and a WPAN communication method using the same. More particularly, the present disclosure relates to a memory card that provides both of an external memory to an information communication terminal and a connectable memory card WPAN add-on as well as a WPAN function to an information communication terminal lacking a built-in wireless communication module, and its associated information communication terminal and wireless communication method for using such a memory card.

### [Background Art]

The statements in this section merely provide background information related to the present disclosure and may not constitute prior art.

Technological leap of the information communication technology has helped empower information communication terminals including mobile communication terminals, portable multimedia players (PMP), and digital cameras to provide users with various supplementary functions such as video calling, wireless Internet accessing, and digital multimedia broadcasting (DMB) over their fundamental voice calling, video playback, and picture taking performances.

Additionally, in the evolving ubiquitous computing environment, necessities have risen to transfer information in wireless personal area network or WPAN as called hereinafter and Bluetooth, ZigBee, and ultra wide band or UWB have been offered as the WPAN technologies, which are adopted to develop commercial services and applied technologies. Here, WPAN is an ad hoc data communication system to have multiple information communication terminals intercommunicate among them aiming to a small group of users in a relatively short distance.

However, with the exception of Bluetooth, terminal manufacturers have shown less interest in mounting the WPAN functions of ZigBee, UWB and the rest on their information communication terminals, which explains the inactive distribution of the non-Bluetooth WPAN technologies.

To cope with this situation, WPAN dongle modules, i.e. dongle type of wireless communication modules have been developed so that they may be connected to the information communication terminals without a built-in wireless communication module. Such a dongle type of wireless communication module is exposed outside of the terminal when connected to a communication port of the terminal and is susceptible to an unexpected impact which may disorder or damage the wireless communication modules. Further, when the information communication terminal is turned off, the module dongle needs to be detached for storage out of concern for misplacement.

Along with the dongle of WPAN module to add the WPAN feature, WPAN cards were also designed with a WPAN communication module incorporated to fit into memory card slots prepared in the information communication terminals. Here, to make use of such WPAN cards, it is necessary to provide the support of memory card plus extensions card protocols such as SDIO (secure digital input output) and CFIO (compact flash input output) which are compatible to both the memory cards and the extensions cards including the WPAN cards.

However, there is a practical difficulty yet to establish an amicable atmosphere for the overall WPAN users due to lack of the information communication terminals that support both the memory card and extensions card protocols.

### [Disclosure]

### [Technical Problem]

In view of the deficiency identified above, the present disclosure provides a memory card that provides both of an external memory to an information communication terminal and a connectable memory card WPAN add-on as well as a WPAN function to an information communication terminal lacking a built-in wireless communication module, and its compatible information communication terminal and wireless communication method for using such a memory card.

### [Technical Solution]

One aspect of the present disclosure provides a memory card connectable to an information terminal via a card slot equipped on the information terminal, the memory card including an external memory for storing transmitted data or providing the stored data from and to the information communication terminal through communications therebetween, a wireless communication module for communicating with the information communication terminal to emit the transmitted data or transmit received data from outside to the information communication terminal, a card control for storing a card register map with a first register value registered for assigning the external memory and a second register value registered for assigning the wireless communication module, and upon receiving register information transmitted from the information communication terminal, referring the card register map for a register value indicated by the register information to control the information communication terminal and the external memory to intercommunicate when the register information indicates the first register value or to control the information communication terminal and the wireless communication module to intercommunicate when the register information indicates the second register value, and a card interface connected with pins of the card slot for relaying the register information received from the information communication terminal to the card control, delivering the transmitted data to the card control, and transmitting the stored data or the received data to the information communication terminal.

Another aspect of the present disclosure provides an information communication terminal having at least one function of mobile communication, portable multimedia play, and digital camera, the terminal being adapted to use a memory card with a wireless communication module attached and including a key input for receiving a user's execution command for a memory application or a user's execution command for a wireless personal area network; a memory for storing a memory application for use of an external memory of a combined data storage and WPAN card and a WPAN application for use of a wireless communication module of the combined data storage and WPAN card; a card driver for storing a terminal register map with a first register information registered to indicate a first register value of a card register map stored in the combined data storage and WPAN card and a second register information registered to indicate a second register value of the card register map, incorporating a memory driver for connecting the memory application and the external memory of the combined data storage and WPAN card and a WPAN driver for connecting the WPAN application and the wireless communication module of the combined data storage and WPAN card, and delivering the first register information if the memory driver is loaded and delivering the second register information if the WPAN driver is loaded; a control, in response to the memory application execution command delivered from the key input for executing the memory application, loading the memory driver, and then delivering a transmitted data generated through the memory application to the memory driver, and in response to the WPAN application execution command delivered from the key input for executing the WPAN application, loading the WPAN driver, and then delivering a transmitted data generated through the WPAN application to the WPAN driver; and a host interface for relaying the first register information and the second register information delivered from the card driver to a card interface of the combined data storage and WPAN card, and delivering the transmitted data generated through the memory application or the WPAN application to the card interface.

Yet another aspect of the present disclosure provides a memory card connectable to an information communication terminal via a card slot equipped on the information communication terminal, the memory card including a memory for storing one or both of terminal data transmitted from the information communication terminal and external terminal data received through WPAN communications with an external WPAN terminal; a WPAN communication module for analyzing a first command that is a command of a memory card protocol transmitted from the information communication terminal or a second command that is a command of the memory card protocol received through WPAN communications with the external WPAN terminal, and responding to the first command or the second command to transmit the terminal data through the WPAN communications to the external WPAN terminal or receive the external terminal data through the WPAN communications with the external WPAN terminal; and a card control for receiving the terminal data from the information communication terminal, and performing either to receive and analyze the first command from the information communication terminal for delivering the terminal data to one or both of the memory and the WPAN communication module or to relay the external terminal data delivered from the WPAN communication module to one or both of the memory and the information communication terminal.

Yet another aspect of the present disclosure provides a WPAN communication method using a memory card including a card control, a WPAN communication module, and a memory, the method including analyzing a first command by the card control when the command is transmitted to the memory card from an information communication terminal; if the first command is a "write", by using the card control, relaying terminal data received from the information communication terminal to the memory, and upon completion of storing the terminal data therein, delivering the first command to the WPAN communication module; by using the WPAN communication module, delivering the terminal data stored in the memory to an external WPAN terminal through WPAN communications; if the first command in the step of analyzing the first command is a "read", delivering the first command by the card control to the WPAN communication module; by using the WPAN communication module, relaying external terminal data received through the WPAN communications with the external WPAN terminal to the card control; and transmitting the external terminal data stored in the memory to the information communication terminal when the external terminal data is delivered by the card control to the memory, and upon completion of storing the external terminal data therein.

Yet another aspect of the present disclosure provides a WPAN communication method using a memory card including a card control, a WPAN communication module, and a memory, the method including: analyzing a first command by the card control when the command is transmitted to the memory card from an information communication terminal; if the first command is a "write", delivering the first command by the card control to the WPAN communication module; by using the WPAN communication module, transmitting terminal data stored in the memory to an external WPAN terminal through WPAN communications; if the first command in the step of analyzing the first command is a "read", delivering the first command by the card control to the WPAN communication module; by using the WPAN communication module, relaying external terminal data received through the WPAN communications with the external WPAN terminal to the card control; and transmitting the external terminal data by the card control to the information communication terminal.

Yet another aspect of the present disclosure provides a WPAN communication method using a memory card including a card control, a WPAN communication module, and a memory, the method including: receiving and analyzing a second command by the WPAN communication module when the command is transmitted from an external WPAN terminal through WPAN communications; if the second command is a "write", by using the WPAN communication module, storing external terminal data received through the WPAN communications with the external WPAN terminal via the card control into the memory; upon completion of storing the external terminal data therein, notifying by the WPAN communication module to the WPAN terminal of the completion of the external terminal data storage; if the second command in the step of receiving and analyzing the second command is a "read", extracting the previously stored data in the memory by the WPAN communication module via the card control; and transmitting the previously stored data by the WPAN communication module through the WPAN communications to the external WPAN terminal.

### [Advantageous Effects]

According to the disclosure as described above, the memory card with the extra wireless communication module adds the WPAN function to the information communication terminal lacking a built-in wireless communication module, and due to the inserted connection of the memory card into a card slot of the information communication terminal, the wireless communication module add-on to the memory card is safeguarded from external impacts and allowed to be left and secured inside the terminal at the card slot free of a concern of misplacement.

### [Description of Drawings]

FIG. 1 is a schematic diagram for showing the internal construction of a combined data storage and WPAN card according to a first aspect;

FIG. 2 is a sectional view of the combined data storage and WPAN card according to the first aspect;

FIG. 3 is a schematic block diagram for showing the internal construction of an information communication terminal according to the first aspect;

FIG. 4 is a schematic diagram for showing the internal construction of a memory card with a WPAN communication module according to a second aspect;

FIG. 5 is a flow chart for showing the data transmission and reception according to a first command by a combined memory and WPAN card according to the second aspect;

FIG. 6 is a flow chart for showing the alternative data transmission and reception according to the first command by the combined memory and WPAN card according to the second aspect; and

FIG. 7 is a flow chart for showing the data transmission and reception according to a second command by the combined memory and WPAN card according to the second aspect.

### [Mode for Invention]

Hereinafter, aspects of the present disclosure will be described in detail with reference to the accompanying drawings. In the following description, the same elements will be designated by the same reference numerals although they are shown in different drawings. Further, in the following description of the present disclosure, a detailed description of known functions and configurations incorporated herein will be omitted when it may make the subject matter of the present disclosure rather unclear.

Also, in describing the components of the present disclosure, there may be terms used like first, second, A, B, (a), and (b). These are solely for the purpose of differentiating one component from the other but not to imply or suggest the substances, order or sequence of the components. If a component were described as 'connected', 'coupled', or 'linked' to another component, they may mean the components are not only directly 'connected', 'coupled', or 'linked' but also are indirectly 'connected', 'coupled', or 'linked' via a third component.

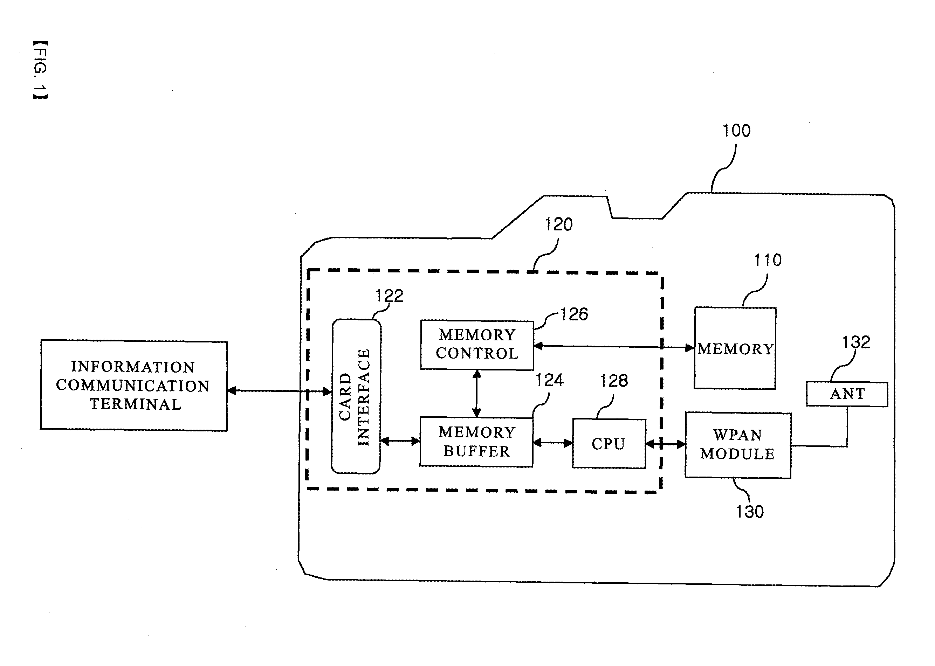

FIG. 1 is a schematic diagram for showing the internal construction of a combined data storage and WPAN card 100 according to a first aspect.

FIG. 1 is a schematic diagram for showing the internal construction of a combined data storage and WPAN card 100 according to a first aspect. Combined data storage and WPAN card 100 includes a card control 110, an external memory 120, a wireless communication module 130, and a card interface 140. In the first aspect, combined data storage and WPAN card 100 may be formatted to one of CF (compact flash) card standard, SD (secure digital) card standard, mini SD card standard, micro SD card standard, memory stick card standard, and XD-picture card standard.

Card control 110 stores a card register map with a first register value registered for assigning external memory 120 and a second register value registered for assigning wireless communication module 130, and upon receiving register information transmitted through card interface 140 from an information communication terminal 300 that will be described, card control 110 refers the card register map for a register value indicated by the register information to control information communication terminal 300 and external memory 120 to intercommunicate at the first register value indicated by the register information and control information communication terminal 300 and wireless communication module 120 to intercommunicate at the second register value indicated by the register information.

In other words, if the register information is the first register value, card control 110 operates either to relay transmitted data of information communication terminal 300 via card interface 140 to external memory 120 or to supply stored data in external memory 120 to information communication terminal 300, and if the register information is the second register value, card control 110 operates either to relay transmitted data of information communication terminal 300 via card interface 140 to wireless communication module 130 or to send the received data at wireless communication module 130 to information communication terminal 300. Here, the transmitted data, stored data, and received data include one or more of image data, video data, and audio data.

External memory 120 is a non-volatile flash memory that keeps information from being erased and it communicates under card control 110 with information communication terminal 300 to store the transmitted data therefrom or supply the stored data thereto.

Wireless communication module 130 includes a WPAN chip 132 that integrates an RF transceiver, a base band modem, a micro controller and others, a plurality of peripheral elements 134 for driving wireless communication module 130, a X-TAL or quartz crystal 136 acting an oscillator for supplying clock signals to the base band modem, and an antenna 138 for externally transmitting high frequency signals generated by WPAN chip 132 and relaying the similar high frequency signals from the outside to the WPAN chip 132. Here, WPAN chip includes one of Bluetooth chip, ZigBee chip, and UWB or Ultra Wide Band chip.

In the first aspect, wireless communication module 130 communicates under card control 110 with information communication terminal 300 to emit the transmitted data therefrom or relay the received data from the outside to information communication terminal 300.

Card interface 140 is adapted to be connected with information communication terminal 300 via a host interface 350 such as card slot pins equipped on terminal 300 to relay the register information sent from information communication terminal 300 to card control 110 and deliver the transmitted data of information communication terminal 300 to card control 110 or send the stored data or received data to information communication terminal 300.

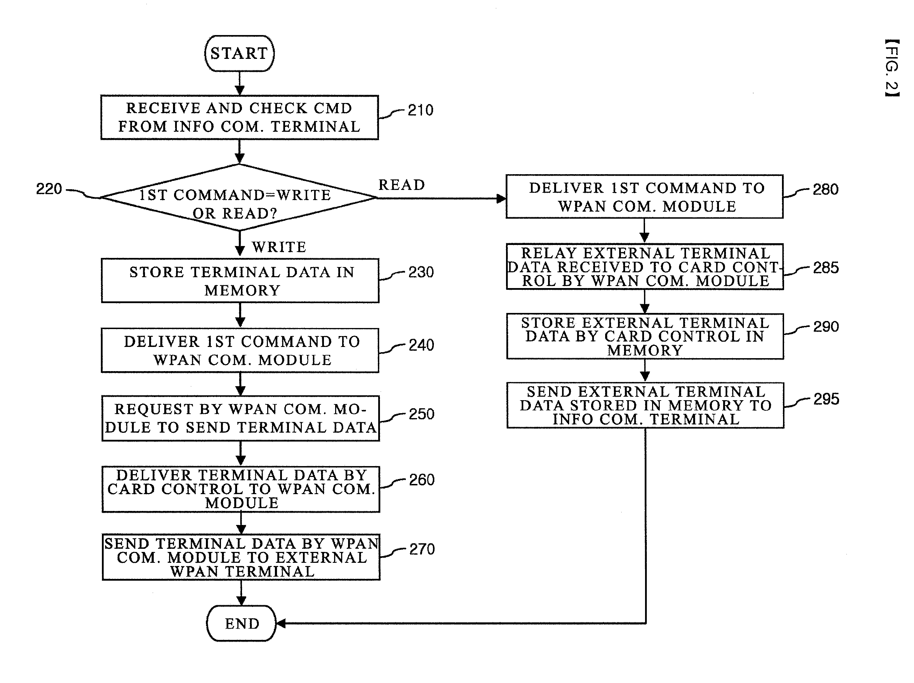

FIG. 2 is a sectional view of the combined data storage and WPAN card 100 according to the first aspect.

Combined data storage and WPAN card 100 includes a circuit board 210 for electrically connecting card control 110, external memory 120, wireless communication module 130, and card interface 140 where the flash memory of external memory 120 is stacked on circuit board 210 as it supports stacks of WPAN chip 132 and the plurality of peripheral elements 134, thereby compacting the entire components within the small space of combined data storage and WPAN card 100.

On the other hand, card control 110, quartz crystal 136, and antenna 138 of larger sizes relative to the plurality of peripheral elements 134 are arranged in the remaining area of external memory 120, and card interface 140 is positioned at the bottom side of circuit board 210. Here, the internal space of combined data storage and WPAN card 100 is filled with a mold 220 to safeguard circuit board 210, card control 110, external memory 120, WPAN chip 132, the plurality of peripheral elements 134, quarts crystal 136, and antenna 138 inside combined data storage and WPAN card 100.

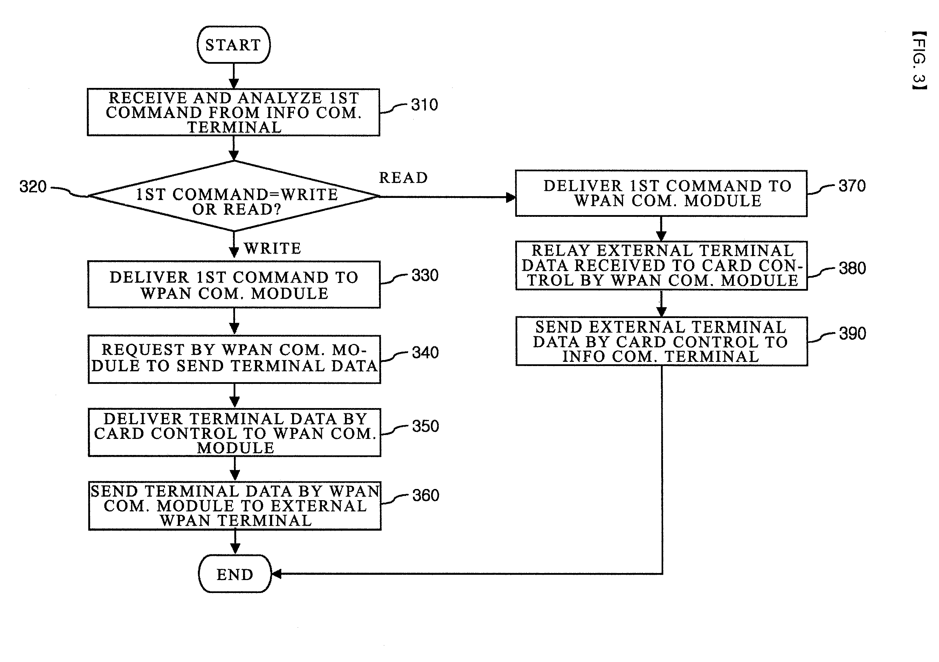

FIG. 3 is a schematic block diagram for showing the internal construction of an information communication terminal 300 according to the first aspect.

Information communication terminal 300 according to the first aspect is a nonrestrictive reference to mobile communication terminals, portable multimedia players or PMPs, and digital cameras among others, and includes a key input 310, control 330, card driver 340, and a host interface 350.

Key input 310 is a means for receiving terminal user's commands and relays a memory application execution command or a WPAN application execution command from the terminal user to control 330.

Memory 320 stores a program for driving functions after processing of control 330 and a predetermined program for implementing user conveniences and various basic functions among other programs, and stores one or more of image data of different kinds, video data of different kinds, and audio data of different kinds.

In the first aspect, memory 320 stores a memory application 322 for use of external memory 120 of combined data storage and WPAN card 100 and a WPAN application 324 for use of wireless communication module 130 of combined data storage and WPAN card 100.

Control 330 follows the user's commands received through key input 310 to execute the driving program stored in memory 320.

In the first aspect, control 330 is responsive to the memory application execution command delivered from key input 310 to execute memory application 322, load the memory driver included in card driver 340, and then deliver a transmitted data generated through memory application 322 to the memory driver 342, and it is responsive to the WPAN application execution command delivered from the key input 310 to execute the WPAN application 324, load WPAN driver 344 in card driver 340, and then deliver a transmitted data generated through WPAN application 324 to WPAN driver 344. Here, control 330 may respond to an execution of memory application 322 for loading stored data in external memory 120 of combined card 100 from memory application 322 and respond to an execution of WPAN application 324 for taking advantage of the received data at wireless communication module 130 of combined card 100 through WPAN driver 344.

In the first aspect, where information communication terminal 300 is a mobile communication terminal, control 330 calls either an API (application program interface) for memory applications for executing memory application 322 or an API for WPAN applications for executing WPAN application 324.

Card driver 340 stores a terminal register map with a first register information registered to indicate a first register value of a card register map and WPAN card and a second register information registered to indicate a second register value of the card register map, and incorporates memory driver 342 for connecting memory application 322 and external memory 120 and WPAN driver 344 for connecting WPAN application 324 and wireless communication module 130.

Here, if memory driver 342 is loaded by control 330, card driver 340 refers to the terminal register map for extracting the first register information, sends the first register information to combined data storage and WPAN card 100 through host interface 350 that will be detailed below, and then receives the transmitted data generated through memory application 322 from control 330, and sends the transmitted data to combined data storage and WPAN card 100 through host interface 350.

Meanwhile, if WPAN driver 344 is loaded by control 330, WPAN driver 344 refers to the terminal register map stored in card driver 340 for extracting the second register information, sends the second register information to combined data storage and WPAN card 100 through host interface 350, and then receives the transmitted data generated through WPAN application 324 from control 330, sends the transmitted data to combined data storage and WPAN card 100 through host interface 350, and relays the received data sent from combined data storage and WPAN card 100 and received at host interface 350 to control 330.

Host interface 350 delivers the first register information or the second register information to card interface 140 of combined data storage and WPAN card 100, and also delivers the transmitted data generated through memory application 322 or WPAN application 324 to card interface 140.

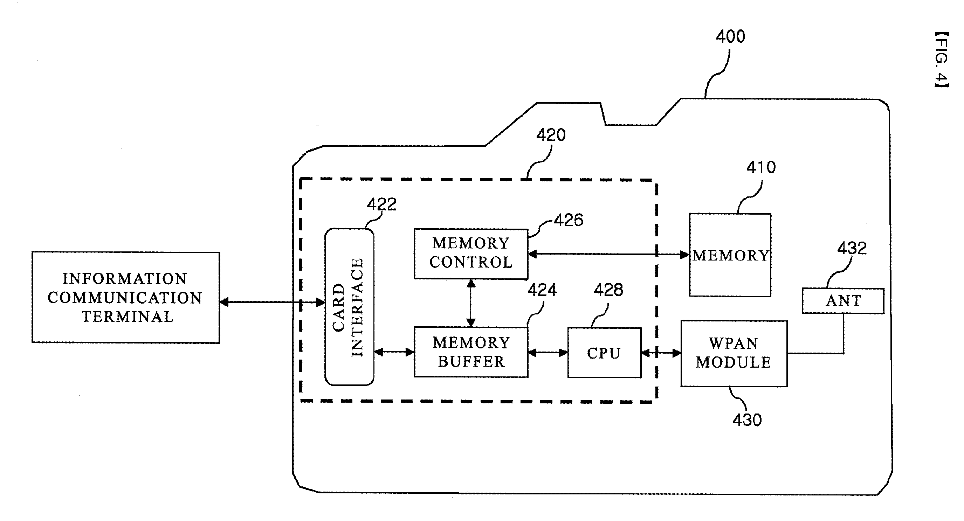

FIG. 4 is a schematic diagram for showing the internal construction of a memory card 400 with a WPAN communication module according to a second aspect.

This memory card 400 with the WPAN communication module according to the second aspect that is called a combined memory and WPAN card includes a memory 410, card control 420, and a WPAN communication module 430. Here, combined memory and WPAN card 400 is formatted to a standard selected from a group of CF (compact flash) card standard, SD (secure digital) card standard, mini SD card standard, micro SD card standard, and memory stick card standard.

Memory 410 is a non-volatile flash memory that keeps information from being erased and stores one or both of terminal data transmitted under card control 420 from an information communication terminal and external terminal data received through WPAN communications with an external WPAN terminal (not shown).

In addition, memory 410 may provide previously stored data through card control 420 to one or both of the information communication terminal and the external WPAN terminal. Here, the information communication terminal includes a mobile communication terminal equipped with a card slot for using combined memory and WPAN card 400, a PMP, and a digital camera, while the external WPAN terminal (not shown) includes a mobile communication terminal provided with a WPAN function, the PMP, and the digital camera.

Card control 420 receives terminal data from the information communication terminal, and also receives a first command (CMD) that is a command of a memory card protocol from the information communication terminal for analyzing the same before delivering it to one or both of memory 410 and WPAN communication module 430, or relays the external terminal data received from WPAN communication module 430 to one or both of memory 410 and the information communication terminal.

The detailed explanation is as follows.

First, when combined memory and WPAN card 400 is inserted into the card slot of the information communication terminal, card control 420 initializes combined memory and WPAN card 400, and then maintains it in an idle state, and upon receiving the request for a WPAN service from the information communication terminal, it switches combined memory and WPAN card 400 from the idle state to an active state.

Then, if the first command from the information communication terminal received and analyzed is a "write", card control 420 relays the terminal data from the information communication terminal to memory 410 for storing the same therein, and upon completion of storing the terminal data, delivers the first command to WPAN communication module 430, and then extracts the terminal data stored in memory 410 for delivering it to WPAN communication module 430 at the request from the same module. Here, card control 420 that holds delivering the terminal data to memory 410 may send the data to WPAN communication module 430 and respond to the request from WPAN communication module 430 by immediately delivering the terminal data received from the information communication terminal to WPAN communication module 430 by a streaming method.

If the first command transmitted from the information communication terminal is a "read", card control 420 delivers the first command to WPAN communication module 430, and then relays the external terminal data received from WPAN communication module 430 to memory 410, and upon completion of storing the external terminal data, transmits the external terminal data stored in memory 410 to the information communication terminal. Here, card control 420 after delivering the first command to WPAN communication module 430 may hold delivering the external terminal data received from WPAN communication module 430 to memory 410 but directly send it to the information communication terminal by the streaming method.

Card control 420 that performs the above functions includes a card interface 422, a memory buffer 424, memory control 426, and a central processing unit (CPU) 428, the constructions of which will be respectively detailed in the following.

Card interface 422 connects to a host interface of the information communication terminal such as memory card slot pins, and relays either the first command or the terminal data received from the information communication terminal to CPU 428, and also relays either the previously stored data or the external terminal data delivered through memory buffer 424 to the information communication terminal.

Memory buffer 424 temporarily stores either the terminal data or the external terminal data. In addition, as the previously stored data in memory 410 is transmitted to the information communication terminal, memory buffer 424 may temporarily store the previously stored data.

Memory control 426, under the direction of CPU 428 that will be described, stores or extracts the terminal data and the external terminal data in and out of memory 410.

In addition, memory control 426 extracts the previously stored data in memory 410 as directed by CPU 428.

CPU 428 controls memory buffer 424 and memory control 426.

In the second aspect, CPU 428 analyzes the first command received through card interface 422 and if it is a "write", it directs memory control 426 to store the terminal data received through card interface 422 in memory 410, and upon completion of storing the terminal data therein, delivers the first command to WPAN communication module 430, and then directs memory control 426 at the request of WPAN communication module 430 to have the terminal data extracted from the storage in memory 410 and delivered to WPAN communication module 430. Here, CPU 428 may deliver the first command to WPAN communication module 430, and then controls memory buffer 424 at the request of WPAN communication module 430 to directly send the terminal data to WPAN communication module 430 by the streaming method.

If the first command is a "read", CPU 428 delivers the first command to WPAN communication module 430, and then directs memory control 426 to store the external terminal data received from WPAN communication module 430 in memory 410, and upon completion of storing the external terminal data therein, and transmits the external terminal data stored in memory 410 to the information communication terminal. Here, CPU 428 may also deliver the first command to WPAN communication module 430, and then controls memory buffer 424 to directly send the external terminal data received from WPAN communication module 430 to the information communication terminal by the streaming method.

WPAN communication module 430 includes a WPAN chip that integrates an RF transceiver, a base band modem, a micro controller and others, a plurality of peripheral elements for driving WPAN communication module 430, a X-TAL or quartz crystal acting an oscillator for supplying clock signals to the base band modem.

In the second aspect, WPAN communication module 430 analyzes a first command received from card control 420 or a second command that is a command of a memory card protocol transmitted through WPAN communications from an external WPAN terminal (not shown), and responds to the first command or the second command for transmitting the terminal data received via card control 420 through the WPAN communications to the external WPAN terminal (not shown) or relaying the external terminal data received through the WPAN communications with the external WPAN terminal to card control 420.

The detailed explanation is as follows.

First, when combined memory and WPAN card 400 is inserted into the card slot of the information communication terminal and rests in an idle state, WPAN communication module 430 periodically wakes up to check for any signal receptions from the external WPAN terminal.

Upon receiving the request for a WPAN service from the external WPAN terminal, it is delivered to card control 420 to switch combined memory and WPAN card 400 from the idle state to an active state, and the second command transmitted from the external WPAN terminal through the WPAN communications is received and analyzed to see if it is a "write" where WPAN communication module 430 directs card control 420 to have the external terminal data received from the external WPAN terminal through the WPAN communications delivered to and stored in memory 410, and upon completion of storing the external terminal data therein, notifies the external WPAN terminal of such a completion data storage. Here, as WPAN communication module 430 delivers the external terminal data to memory 410, it is preferable to temporarily store the external terminal data in memory buffer 424 in card control 420.

If the second command transmitted from the external terminal (not shown) is a "read", WPAN communication module 430 directs card control 420 to extract the previously stored data in memory 410 and transmit the same to the external WPAN terminal through the WPAN communications. Here, as WPAN communication module 430 extracts the previously stored data from memory 410, it is preferable to temporarily store the previously stored data in memory buffer 424 in card control 420.

Meanwhile, WPAN communication module 430 receives and analyzes the first command transmitted from card control 420 to see if it is the "write" where module 430 requests card control 420 sends the terminal data and relays the same upon receipt to the external WPAN terminal through the WPAN communications, while if the first command is the "read", module 430 relays the external terminal data received from the external WPAN terminal to card control 420.

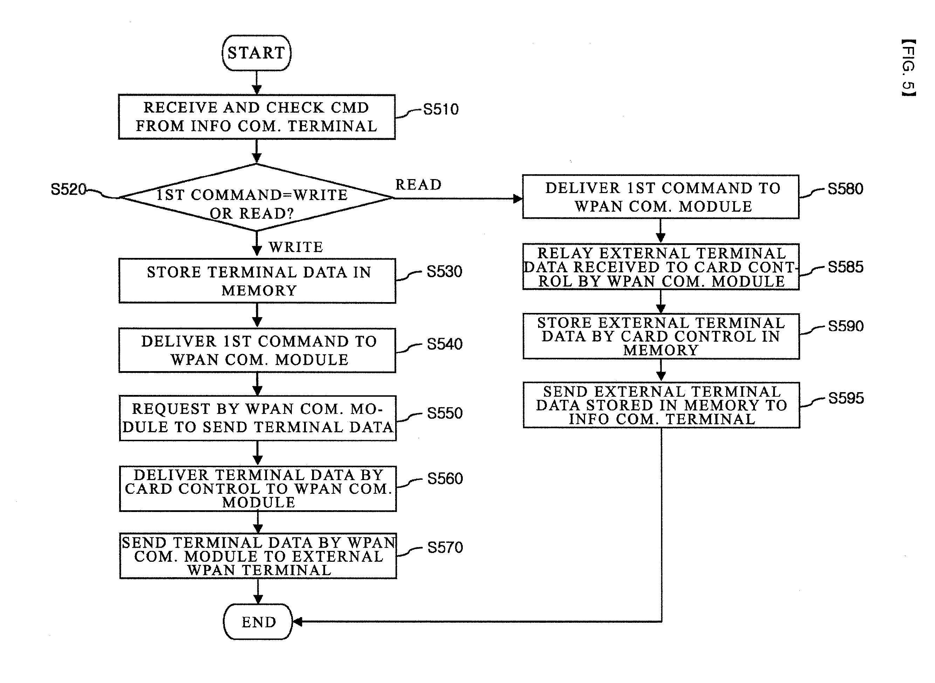

FIG. 5 is a flow chart for showing the data transmission and reception according to the first command (CMD) by the combined memory and WPAN card according to the second aspect.

When the information communication terminal sends the first CMD, card control 420 receives and analyzes the same to determine whether it is "write" or "read" in steps S51 0 and S520. Before performing the step S51 0, when combined memory and WPAN card 400 was inserted into the card slot of the information communication terminal, card control 420 initialized combined memory and WPAN card 400, and then maintained it in the idle state, and upon receiving the request for the WPAN service from the information communication terminal, it switched combined memory and WPAN card 400 from the idle state to the active state as described above.

If the first CMD in step S520 is "write", card control 420 relays the terminal data received from the information communication terminal to memory 410, and upon completion of storing the terminal data therein, it delivers the first CMD to WPAN communication module 430 in steps S530 and S540.

Upon receiving the first CMD delivered, WPAN communication module 430 requests card control 420 for the terminal data and relays the terminal data delivered from card control 420 to the external WPAN terminal through the WPAN communications in steps S550, S560, and S570.

If the first CMD in step S520 is "read", card control 420 delivers the first CMD to WPAN communication module 430 in step S580.

Upon receiving the first CMD delivered, WPAN communication module 430 relays the external terminal data received through the WPAN communications with the external WPAN terminal to card control 420, which then delivers the external terminal data to memory 410, and upon completion of storing the external terminal data therein, it transmits the same storage in memory 410 to the information communication terminal in steps S585, S590, and S595.

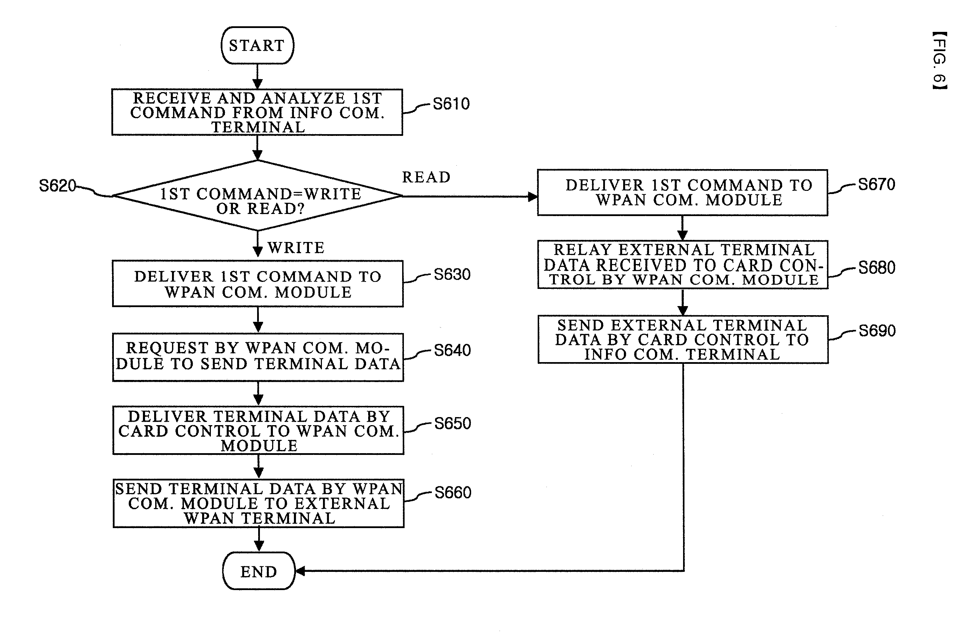

FIG. 6 is a flow chart for showing the alternative data transmission and reception according to the first command by the combined memory and WPAN card according to the second aspect.

When the information communication terminal transmits the first CDM, card control 420 receives and analyzes the same to determine whether it is "write" or "read" in steps S61 0 and S620. Before performing the step S51 0, when combined memory and WPAN card 400 was inserted into the card slot of the information communication terminal, card control 420 initialized combined memory and WPAN card 400, and then maintained it in the idle state, and upon receiving the request for the WPAN service from the information communication terminal, it switched combined memory and WPAN card 400 from the idle state to the active state as described above.

If the first CMD in step S620 is "write", card control 420 delivers the first CMD to WPAN communication module 430 in step S680.

Upon receiving the first CMD delivered, WPAN communication module 430 requests card control 420 for the terminal data and relays the terminal data delivered from card control 420 to the external WPAN terminal through the WPAN communications in steps S640, S650, and S660.

If the first CMD in step S620 is "read", card control 420 delivers the first CMD to WPAN communication module 430 in step S670.

Upon receiving the first CMD delivered, WPAN communication module 430 relays the external terminal data received through the WPAN communications with the external WPAN terminal to card control 420, which then delivers the external terminal data to the information communication terminal in steps S680 and S690.

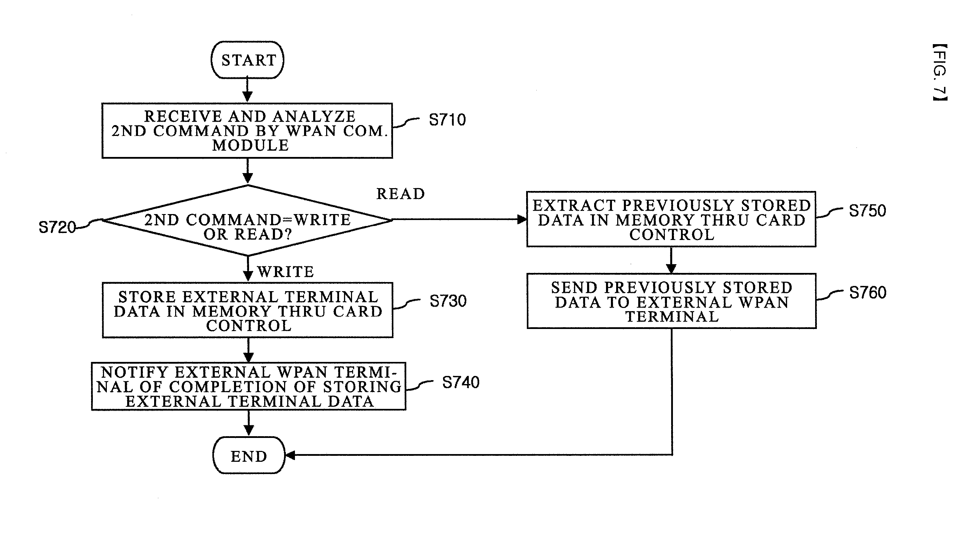

FIG. 7 is a flow chart for showing the data transmission and reception according to a second command by the combined memory and WPAN card according to the second aspect.

When the external WPAN terminal transmits the second CDM through the WPAN communications, card control 420 receives and analyzes the same to determine whether is "write" or "read" in steps S71 0 and S720.

If the second CMD in step S720 is "write", WPAN communication module 430 relays the external terminal data received from the external WPAN terminal through the WPAN communications to memory 410 in step S730.

When the external terminal data is completely stored, WPAN communication module 430 notifies the external WPAN terminal of the completion of the data storage in Step S740.

If the second CMD in step S720 is "read", WPAN communication module 430 extracts the previously stored data in memory 410 through card control 420, and transmits the previously stored data to the external WPAN terminal through the WPAN communications in steps S750 and S760.

In the description above, although all of the components of the aspect of the present disclosure may have been explained as assembled or operatively connected as a unit, the present disclosure is not intended to limit itself to such aspect. Rather, within the objective scope of the present disclosure, the respective components may be selectively and operatively combined in any numbers. Every one of the components may be also implemented by itself in hardware while the respective ones can be combined in part or as a whole selectively and implemented in a computer program having program modules for executing functions of the hardware equivalents. Codes or code segments to constitute such a program may be easily deduced by a person skilled in the art. The computer program may be stored in computer readable media, which in operation can realize the aspects of the present disclosure. As the computer readable media, the candidates include magnetic recording media, optical recording media, and carrier wave media.

In addition, terms like 'include', 'comprise', and 'have' should be interpreted in default as inclusive or open rather than exclusive or closed unless expressly defined to the contrary. All the terms that are technical, scientific or otherwise agree with the meanings as understood by a person skilled in the art unless defined to the contrary. Common terms as found in dictionaries should be interpreted in the context of the related technical writings not too ideally or impractically unless the present disclosure expressly defines them so.

Although exemplary aspects of the present disclosure have been described for illustrative purposes, those skilled in the art will appreciate that various modifications, additions and substitutions are possible, without departing from essential characteristics of the disclosure. Therefore, exemplary aspects of the present disclosure have not been described for limiting purposes. Accordingly, the scope of the disclosure is not to be limited by the above aspects but by the claims and the equivalents thereof.

### [Industrial Applicability]

According to the disclosure as described above, when applied to the space of the memory card, the wireless communication module incorporated into the memory card provides the WPAN function to the information communication terminal lacking a built-in wireless communication module giving a highly practical value.

## Claims

1. A memory card connectable to an information terminal via a card slot equipped on the information terminal, the memory card comprising:
an external memory for storing transmitted data or providing the stored data from and to the information communication terminal through communications therebetween;
a wireless communication module for communicating with the information communication terminal to emit the transmitted data or transmit received data from outside to the information communication terminal;
a card control for storing a card register map with a first register value registered for assigning the external memory and a second register value registered for assigning the wireless communication module, and upon receiving register information transmitted from the information communication terminal, referring the card register map for a register value indicated by the register information to control the information communication terminal and the external memory to intercommunicate when the register information indicates the first register value or to control the information communication terminal and the wireless communication module to intercommunicate when the register information indicates the second register value; and
a card interface connected with pins of the card slot for relaying the register information received from the information communication terminal to the card control, delivering the transmitted data to the card control, and transmitting the stored data or the received data to the information communication terminal.

2. The memory card of claim 1, wherein the wireless communication module includes a WPAN or wireless personal area network chip, a plurality of peripheral elements for driving the wireless communication module, a X-TAL or quartz crystal acting an oscillator for supplying clock signals to the WPAN chip, and an antenna for externally transmitting high frequency signals generated by the WPAN chip and relaying the similar high frequency signals from the outside to the WPAN chip.

3. The memory card of claim 2, wherein the WPAN chip includes one out of Bluetooth chip, ZigBee chip, and UWB or Ultra Wide Band chip.

4. The memory card of claim 1, wherein the memory card is formatted to a standard selected from a group of CF (compact flash) card standard, SD (secure digital) card standard, mini SD card standard, micro SD card standard, memory stick card standard, and XD-picture card standard.

5. The memory of claim 1, further comprising:
a circuit board for electrically connecting the card control, the external memory, the wireless communication module, and the card interface.

6. An information communication terminal having at least one function of mobile communication, portable multimedia play, digital camera, the terminal being adapted to use a memory card with a wireless communication module attached and comprising:
a key input for receiving a user's execution command for a memory application or a user's execution command for a wireless personal area network;
a memory for storing a memory application for making use of an external memory of a combined data storage and WPAN card and a WPAN application for making use of a wireless communication module of the combined data storage and WPAN card;
a card driver for storing a terminal register map with a first register information registered to indicate a first register value of a card register map stored in the combined data storage and WPAN card and a second register information registered to indicate a second register value of the card register map, incorporating a memory driver for connecting the memory application and the external memory of the combined data storage and WPAN card and a WPAN driver for connecting the WPAN application and the wireless communication module of the combined data storage and WPAN card, and delivering the first register information if the memory driver is loaded and delivering the second register information if the WPAN driver is loaded;
a control, in response to the memory application execution command delivered from the key input for executing the memory application, loading the memory driver, and then delivering a transmitted data generated through the memory application to the memory driver, and in response to the WPAN application execution command delivered from the key input for executing the WPAN application, loading the WPAN driver, and then delivering a transmitted data generated through the WPAN application to the WPAN driver; and
a host interface for relaying the first register information and the second register information delivered from the card driver to a card interface of the combined data storage and WPAN card, and delivering the transmitted data generated through the memory application or the WPAN application to the card interface.

7. The terminal of claim 6, wherein the control responds to an execution of the memory application for loading stored data in the external memory from the memory application and responds to an execution of the WPAN application for taking a transfer of received data at the wireless communication module through the WPAN driver.

8. The terminal of claim 6, wherein in a mobile communication application of the terminal, the control calls either an API (application program interface) for memory applications for executing the memory application or an API for WPAN applications for executing the WPAN application.

9. A memory card connectable to an information communication terminal via a card slot equipped on the information communication terminal, the memory card comprising:
a memory for storing one or both of terminal data transmitted from the information communication terminal and external terminal data received through WPAN communications with an external WPAN terminal;
a WPAN communication module for analyzing a first command that is a command of a memory card protocol transmitted from the information communication terminal or a second command that is a command of a memory card protocol received through WPAN communications with the external WPAN terminal, and responding to the first command or the second command to transmit the terminal data through the WPAN communications to the external WPAN terminal or receive the external terminal data through the WPAN communications with the external WPAN terminal; and
a card control for receiving the terminal data from the information communication terminal, and performing either to receive and analyze the first command from the information communication terminal for delivering the terminal data to one or both of the memory and the WPAN communication module or to relay the external terminal data delivered from the WPAN communication module to one or both of the memory and the information communication terminal.

10. The memory card of claim 9, wherein the card control comprises:
a card interface connected with a host interface of the information communication terminal for receiving the first command and the terminal data from the information communication terminal, and delivering either previously stored data or the external terminal data in the memory to the information communication terminal;
a memory buffer for temporarily storing either the terminal data or the external terminal data;
a memory control for having the terminal data and the external terminal data stored in or extracted from the memory; and
a CPU or central processing unit for analyzing the first command and if it is a "write", directing the memory control to have the terminal data stored in the memory, and upon completion of storing the terminal data therein, delivering the first command to the WPAN communication module, and then directing the memory control to have the terminal data extracted from the memory and delivered to the WPAN communication module, and if the first command is a "read", delivering the first command to the WPAN communication module, and then directing the memory control to have the external terminal data stored in the memory, and upon completion of storing the external terminal data therein, have the external terminal data stored in the memory transmitted to the information communication terminal.

11. The memory card of claim 9, wherein the card control comprises:
a card interface connected with a host interface of the information communication terminal for receiving the first command and the terminal data from the information communication terminal, and delivering either previously stored data or the external terminal data in the memory to the information communication terminal;
a memory buffer for temporarily storing either the terminal data or the external terminal data;
a memory control for having the terminal data and the external terminal data stored in or extracted from the memory; and
a CPU or central processing unit for analyzing the first command and if it is a "write", delivering the first command to the WPAN communication module, and controlling the memory buffer to deliver the terminal data to the WPAN communication module by a streaming method, and if the first command is a "read", delivering the first command to the WPAN communication module, and then controlling the memory buffer to transmit the external terminal data to the information communication terminal by a streaming method.

12. The memory card of claim 9, wherein, at the first command being "write", the card control delivers the terminal data to the memory, and upon completion of storing the terminal data therein, delivers the first command to the WPAN communication module, and then extracts the terminal data stored in the memory and delivers the same to the WPAN communication module.

13. The memory card of claim 9, wherein, at the first command being "write", the card control delivers the first command to the WPAN communication module, and then delivers the terminal data to the WPAN communication module by a streaming method.

14. The memory card of claim 9, wherein at the first command being "read", the card control delivers the first command to the WPAN communication module, and then relays the external terminal data received from the WPAN communication module to the memory, and upon completion of storing the external terminal data therein, delivers the same data to the information communication terminal.

15. The memory card of claim 9, wherein, at the first command being "read", the card control delivers the first command to the WPAN communication module, and then transmits the external terminal data to the information communication terminal by a streaming method.

16. The memory card of claim 9, wherein, at the first command being "write", the WPAN communication module delivers the terminal data to the external terminal through WPAN communications.

17. The memory card of claim 9, wherein, at the first command being "read", the WPAN communication module relays the external terminal data received from the external WPAN terminal to the card control.

18. The memory card of claim 9, wherein at the first command being "write", the WPAN communication module delivers the external terminal data to the memory through the card control.

19. The memory card of claim 9, wherein, at the first command being "read", the WPAN communication module extracts the previously stored data in the memory through the card control, and transmits the previously stored data to the external WPAN terminal through WPAN communications.

20. A WPAN communication method using a memory card including a card control, a WPAN communication module, and a memory, the method comprising:
analyzing a first command by the card control when the command is transmitted to the memory card from an information communication terminal;
if the first command is a "write", by using the card control, relaying terminal data received from the information communication terminal to the memory, and upon completion of storing the terminal data, delivering the first command to the WPAN communication module;
by using the WPAN communication module, delivering the terminal data stored in the memory to an external WPAN terminal through WPAN communications;
if the first command in the step of analyzing the first command is a "read", delivering the first command by the card control to the WPAN communication module;
by using the WPAN communication module, relaying external terminal data received through the WPAN communications with the external WPAN terminal to the card control; and
transmitting the external terminal data stored in the memory to the information communication terminal when the external terminal data is delivered by the card control to the memory, and upon completion of storing the external terminal data therein.

21. A WPAN communication method using a memory card including a card control, a WPAN communication module, and a memory, the method comprising:
analyzing a first command by the card control when the command is transmitted to the memory card from an information communication terminal;
if the first command is a "write", delivering the first command by the card control to the WPAN communication module;
by using the WPAN communication module, transmitting terminal data stored in the memory to an external WPAN terminal through WPAN communications;
if the first command in the step of analyzing the first command is a "read", delivering the first command by the card control to the WPAN communication module;
by using the WPAN communication module, relaying external terminal data received through the WPAN communications with the external WPAN terminal to the card control; and
transmitting the external terminal data by the card control to the information communication terminal.

22. A WPAN communication method using a memory card including a card control, a WPAN communication module, and a memory, the method comprising:
receiving and analyzing a second command by the WPAN communication module when the command is transmitted from an external WPAN terminal through WPAN communications;
if the second command is a write, by using the WPAN communication module, storing external terminal data received through the WPAN communications with the external WPAN terminal via the card control into the memory;
upon completion of storing the external terminal data, notifying by the WPAN communication module to the WPAN terminal of the completion of the external terminal data storage;
if the second command in the step of receiving and analyzing the second command is a read, extracting the previously stored data in the memory by the WPAN communication module via the card control; and
transmitting the previously stored data by the WPAN communication module through the WPAN communications to the external WPAN terminal.
